# EUROPÄISCHE PATENTSCHRIFT

(11) **EP 2 533 626 B1**
(45) Veröffentlichungstag und Bekanntmachung des Hinweises auf die Patenterteilung: **23.07.2014**
(21) Anmeldenummer: 10805189.7
(22) Anmeldetag: 16.12.2010
(51) Int. Cl.: A01G 1/00, A01C 1/04

(54) **VEGETATIONSELEMENT ZUR BEGRÜNUNG VON KÜNSTLICHEN FLÄCHEN MIT NIEDEREN UND/ODER HÖHEREN PFLANZEN SOWIE VERFAHREN ZUR HERSTELLUNG DES VEGETATIONSELEMENTS**
VEGETATION ELEMENT FOR GREENING ARTIFICIAL SURFACES HAVING LOW AND/OR HIGH PLANTS AND METHOD FOR PRODUCING THE VEGETATION ELEMENT
ÉLÉMENT POUR VÉGÉTATION DESTINÉ À CRÉER DES ESPACES VERTS ARTIFICIELS AVEC DES PLANTES BASSES ET/OU PLUS HAUTES ET PROCÉDÉ POUR LA CRÉATION DE L'ÉLÉMENT POUR VÉGÉTATION

(30) Priorität: 11.02.2010 DE 102010007552
(43) Veröffentlichungstag der Anmeldung: 19.12.2012
(73) Patentinhaber: XF Technologies B.V., 6827 AV Arnhem (NL)
(72) Erfinder: BEHRENS, Wolfgang, 27243 Gross Ippener (DE)
(74) Vertreter: Oberlein, Gerriet H. R.
(86) Internationale Anmeldenummer: PCT/DE2010/001480
(87) Internationale Veröffentlichungsnummer: WO 2011/098058

(56) Entgegenhaltungen:
- EP-B1- 1 139 717
- WO-A1-00/01216
- DE-A1- 3 408 698
- DE-A1- 3 816 865
- US-A1- 2001 005 958

## Beschreibung

Die Erfindung betrifft ein Vegetationselement zur Begrünung von künstlichen Flächen mit niederen und/oder höheren Pflanzen gemäß dem Oberbegriff des Patentanspruchs 1 und ein Verfahren zu dessen Herstellung.

Ein Vegetationselement gemäß dem Oberbegriff des Patentanspruchs 1 ist bereits durch das Dokument EP 1 139 717 B1 bekannt, von welchem die Erfindung ausgeht.

Bei dem bekannten Vegetationselement ist es von Vorteil, dass die bei der Herstellung von Rollrasen bzw. Fertigrasen verwendete Technik auf das Gebiet der künstlichen Begrünung mit zweikeimblättrigen Pflanzen, insbesondere der schwach wurzelnden Sukkulenten (Sedum-Arten), Kräutern, Moosen, Farnen, Flechten und dergleichen übertragen werden konnte. Dadurch ist es möglich geworden, die Herstellung des Vegetationselementes kostengünstig und wenig arbeitsintensiv zu gestalten, wodurch das Vegetationselement vergleichsweise preiswert ist.

Die geschilderten Vorteile sind bei dem bekannten Vegetationselement dadurch möglich geworden, dass der anstehende Boden, auf welchem die Kultivierung des Vegetationselementes erfolgt, keimfrei gemacht wird. Der anstehende Boden ist in der Regel ein sonst landwirtschaftlich genutztes Feld bzw. ein Acker oder ein künstlich erzeugter und aufgeschütteter Boden. Keimfrei bedeutet dabei nicht nur eine Bodendesinfektion, da hierbei lediglich tierische Schädlinge, insbesondere Nematoden und Mikroorganismen abgetötet werden. Wichtig ist insbesondere das vollständige Abtöten von Unkrautsamen, Unkrautkeimen und unerwünschten Pflanzenteilen.

Wenn der Boden bei dem bekannten Vegetationselement nicht keimfrei ist, würden im Boden befindliche unerwünschte Pflanzenarten von unten nach oben in das Vegetationselement einwachsen und damit die entsprechende Kultivierung des Vegetationselementes zerstören. Deshalb ist gerade in der kritischen Keim- und Anwuchsphase des Vegetationselementes der keimfreie Zustand des Bodens von großer Wichtigkeit, da die sonst einwachsenden unerwünschten Pflanzenarten den Pflanzen des Vegetationselementes den Wurzelraum sowie den Wasserhaushalt und Nährstoffhaushalt streitig machen würden.

Bei dem bekannten Vegetationselement wird der Boden durch eine Vergasung mit einem unter dem Handelsnamen Basamid bekannten Mittel chemisch keimfrei gemacht. Allerdings ist eine solche Bodensterilisation mit Basamid inzwischen im gesamten EU-Raum nicht mehr zulässig, insbesondere weil bei der Vergasung giftige Gase freiwerden können und weil toxische Nebenwirkungen auftreten können.

Um die Keimung unerwünschter, im anstehenden Boden befindlicher Fremdsaat zu verhindern, könnte man zwar daran denken, den Boden mechanisch so zu bearbeiten, dass Unkräuter vernichtet werden. Diese Methode ist jedoch sehr arbeitsaufwändig und langwierig. Das Verbot einer weiteren Verwendung von Basamid bedeutet also im Ergebnis, dass die erheblichen Vorteile des bekannten Vegetationselementes nicht mehr zum Tragen kommen.

Der Erfindung liegt die Aufgabe zugrunde, ein Vegetationselement zu schaffen, welches nach wie vor preiswert und wenig arbeitsintensiv ist, ohne dass der anstehende Boden keimfrei ausgebildet ist. Außerdem soll ein Verfahren zur Herstellung eines Vegetationselementes geschaffen werden, welches nach wie vor die bei der Herstellung von Fertigrasen oder Rollrasen verwendete Technik auf das Gebiet der künstlichen Begrünung übertragbar macht.

Diese Aufgabe wird bei dem Vegetationselement gemäß dem Oberbegriff des Patentanspruchs 1 durch die Merkmale des kennzeichnenden Teils des Patentanspruchs 1 gelöst. Hinsichtlich des Verfahrens erfolgt die Lösung der Aufgabe durch die Merkmale des kennzeichnenden Teils der Patentansprüche 11 - 13.

Bei der Erfindung befindet sich auf der Schicht aus verdichtetem Boden in neuartiger Weise eine durchwurzelbare Folie, auf welche der Träger aufgelegt ist. Auf dem Träger befindet sich eine Substratschicht, in welche keimfähiges Pflanzenmaterial der höheren und/oder niederen Pflanzen eingebracht ist. Bei dem fertigen Vegetationselement erstrecken sich die Wurzeln der höheren und/oder niederen Pflanzen nach Abschluss der Kultivierungsphase in der Substratschicht, durch den Träger und durch die Folie hindurch und in der unteren Schicht aus verdichtetem Boden.

Ein wesentlicher Vorteil der Erfindung besteht darin, dass keine chemische Bearbeitung der Bodens mehr erforderlich ist, um den Boden keimfrei zu machen. Es können somit keine giftigen Gase mehr austreten und es sind auch keine toxischen Nebenwirkungen vorhanden. Dies wird durch die in neuartiger Weise verwendete Folie erreicht, die es ermöglicht, den Boden im wesentlichen zu sterilisieren, ohne dass das schädliche Mittel Basamid verwendet wird.

Durch die Folie wird dem darunter befindlichen anstehenden Boden nämlich der Faktor Licht entzogen, wodurch eine Keimung unerwünschter Pflanzenarten im Boden unterdrückt wird. Die Folie dient also als Sperre für unerwünschte Fremdvegetationssamen im anstehenden Boden. Außerem wirkt die Folie auch als mechanische Sperre, denn sie verhingert, dass unerwünschte Fremdvegetation im anstehenden Boden nach oben durch die Folie hindurch wachsen kann. Im Ergebnis wird also bei der Erfindung ebenso wie bei dem bekannten Vegetationselement ein keimfreier Boden geschaffen, jedoch ohne den Einsatz chemischer Mittel. Da die Folie, ebenso wie der Träger, durchwurzelbar ausgebildet ist, können sich die Wurzeln der höheren und/oder niederen Pflanzen in gewünschter Weise in den unteren Boden hinein erstrecken.

Ein weiterer Vorteil der Erfindung gegenüber dem bekannten Vegetationselement besteht darin, dass kein gesondertes Bodenverbesserungssubstrat mehr erforderlich ist, und dass auch die bei dem bekannten Vegetationselement vorgesehene Vermischung des Substrats unter Druck mit der oberen Schicht des Bodens entfallen kann.

Durch die Verwendung der Folie erfolgt nämlich eine Trennung zwischen dem anstehenden Boden und dem aufgebrachten Substrat, so dass der pH-Wert des unter der Folie befindlichen Bodens nicht negativ beeinflusst wird, und der Boden für eine weitere landwirtschaftliche Nutzung zur Verfügung steht.

Die Erfindung besteht darin, dass die Folie biologisch abbaubar ist, und dass der Verrottungszeitpunkt der Folie so eingestellt ist, dass die Folie zum Zeitpunkt der maschinellen Ernte des Vegetationselements zumindest grösstenteils verrottet ist.

Die Haltbarkeit der Folie kann z.B. durch Beimischung weniger empfindlicher BAWs (Biologisch Abbaubarer Werkstoffe) aus Rohöl, wie z.B. abbaubaren aliphatischen Polyestern oder Polyvenylalkoholen (PVA) oder Kunststoffe aus nachwachsenden Rohstoffen, beispielsweise auf Basis von Stärke, Cellulose, Polymilchsäure eingestellt werden.

Wenn bei der Erfindung der Verrottungszeitpunkt der Folie so eingestellt ist, dass sie zum Zeitpunkt der maschinellen Ernte im wesentlichen verrottet ist, wird in vorteilhafter Weise erreicht, dass der maschinelle Vorgang des Erntens des Vegetationselementes nicht durch die Folie behindert werden kann.

Eine weitere Ausgestaltung der Erfindung sieht vor, dass auch der Träger biologisch abbaubar ist. Erfindungsgemäß wird der Verrottungszeitpunkt so eingestellt, dass der Träger erst nach der Ernte und der Verarbeitung am neuen Bestimmungsort des Vegetationselements verrottet.

Der Zweck des Trägers besteht in der mechanischen Stabilisierung des Vegetationselements und der Aufnahme von entstehenden Zugkräften während der Ernte des Vegetationselements und auch während des Transportes und der Handhabung am Bestimmungsort des fertigen Vegetationselements, z.B. bei der Begrünung von Dächern. Bisher wurde für den aus einem Gittergewebe bestehenden Träger synthetisches Material, welches nicht biologisch abbaubar ist, verwendet. Dabei besteht der Nachteil, dass bei der maschinellen Ernte des Vegetationselements Reste des synthetischen Materials im zurückbleibenden Boden verbleiben können, wodurch eine deutliche Beeinträchtigung des anstehenden Bodens entsteht.

Wenn bei der genannten zweckmäßigen Ausgestaltung der Erfindung der Träger biologisch abbaubar ist und der Verrottungszeitpunkt so eingestellt ist, dass der Träger nach der Ernte und nach der Verarbeitung am neuen Bestimmungsort des Vegetationselements verrottet ist, bleiben nach der Verarbeitung des Vegetationselements am neuen Bestimmungsort keinerlei Rückstände. Zwar können bei der vorherigen Ernte gewisse Rückstände im Boden verbleiben, da diese aber verrotten, entsteht dadurch kein Nachteil. Alle Elemente - Folie und Träger - werden wegen der biologischen Abbaubarkeit dem natürlichen Kreislauf zugeführt. Da der Träger jedoch während der Ernte noch nicht verrottet ist, kann er seine Aufgabe erfüllen und zur mechanischen Stabilisierung und Erhöhung der Zugfestigkeit dienen.

Die Gewährleistung der Zugfestigkeit des Vegetationselements während der Ernte ist notwendig, da die zum Teil verwendeten Pflanzen wie Sedum einen weniger dichten und flacheren Wurzelballen ausbilden und somit keine derart starke Durchwurzelung des Substrats erfolgt, dass beim Vorgang der Ernte eine ausreichende Stabilität des Vegetationselements gewährleistet ist.

Gemäß einer weiteren vorteilhaften Ausgestaltung wird der Träger durch ein Netz, durch ein Gittergewebe, durch eine Wirrlage oder durch ein Fasergemisch gebildet. Diese Ausgestaltungen gewährleisten, dass der Träger besonders gut als ein Ankerpunkt für die Wurzeln der niederen und/oder höheren Pflanzen dienen kann. Außerdem wird dem Vegetationselement auch eine hinreichende Zugfestigkeit verliehen.

Eine andere vorteilhafte Weiterbildung der Erfindung besteht darin, dass die Folie gelocht ist. Dadurch ist die perforierte Folie in gewissem Maße punktuell wasserdurchlässig, so dass überschüssiges Wasser durch die Perforation im anstehenden Boden versickern kann und eine schädliche Staunässe vermieden wird. Überschüssiges Wasser kann bei Regen oder künstlicher Beregnung entstehen. Außerdem wird durch die Perforation der Folie erreicht, dass die niederen und/oder höheren Pflanzen noch besser durch die Folie hindurch in den anstehenden Boden wurzeln können.

Gemäß einer weiteren vorteilhaften Ausgestaltung der Erfindung ist vorgesehen, dass die Folie und der Träger miteinander verbunden sind und eine Einheit bilden. Zu diesem Zweck können die Folie und der Träger miteinander versteppt sein. Dadurch wird das Aufbringen der Folie und des Gittergewebes auf den verdichteten Boden erleichtert, weil statt zwei einzelner Teile nur die Einheit aus Folie und Träger installiert zu werden braucht.

Eine andere vorteilhafte Weiterbildung der Erfindung sieht vor, dass auf dem Träger eine Krallschicht angeordnet ist, in der sich die Substratschicht befindet. Die an sich bekannte Krallschicht kann aus einem gegen Ultraviolettlicht resistenten Gewebe aus Kunststoff oder auch aus Kokosfasergewebe bestehen. Durch die Krallschicht wird verhindert, dass die Substratschicht durch Wasser und Wind verschoben, weggewaschen oder abgetragen wird.

Eine weitere vorteilhafte Ausgestaltung der Erfindung besteht darin, dass die Folie, der Träger und die Krallschicht miteinander verbunden sind und einen Verbund bilden. Dadurch wird das Aufbringen der drei Komponenten Folie, Träger und Krallschicht auf dem verdichteten Boden erleichtert. Außerdem ist das Aufbringen der drei Komponenten unabhängig von Windstille während der Installation auf dem Feld.

Gemäß einer anderen vorteilhaften Weiterbildung der Erfindung ist der Substratschicht ein Trockenkleber beigemischt. Der Trockenkleber kann alternativ zu der Krallschicht verwendet werden und dient ebenso wie die Krallschicht dem Schutz der Substratschicht gegen Erosion.

Ein erfindungsgemäßes Verfahren gemäß Anspruch 11 zur Herstellung des Vegetationselements nach Anspruch 1 ist durch die folgenden Verfahrensschritte gekennzeichnet:
a) Ein als Kulturgrundlage dienender anstehender Boden wird verdichtet, so dass eine Schicht aus verdichtetem Boden entsteht,
b) auf die Schicht aus verdichtetem Boden wird eine durchwurzelbare Folie gelegt,
c) auf die Folie wird ein durchwurzelbarer Träger gelegt,
d) auf den Träger wird Substrat zur Bildung einer Substratschicht aufgeschüttet, welche als Saatbeet für die niederen und/oder höheren Pflanzen dient,
e) ein keimfähiges Pflanzenmaterial der niederen und/oder höheren Pflanzen wird in die Substratschicht eingesät oder aufgestreut,
f) das soweit hergestellte Vegetationselement wird gärtnerisch gepflegt, bis sich die niederen und/oder höheren Pflanzen gebildet haben,
g) das Vegetationselement wird maschinell geschält und geerntet.

Der Verfahrensschritt b), wonach auf die Schicht aus verdichtetem Boden eine durchwurzelbare Folie gelegt wird, ist von besonderer Bedeutung. Nachdem bei der Erfindung bewusst darauf verzichtet wird, den anstehenden Boden mit chemischen Mitteln keimfrei zu machen, muss davon ausgegangen werden, dass sich im anstehenden Boden unerwünschte Pflanzenreste und Fremdvegetationssamen befinden. Durch die Folie wird den unerwünschten Pflanzensamen im anstehenden Boden der Faktor Licht entzogen, wodurch eine erfolgreiche Keimung der unerwünschten Pflanzensamen verhindert wird und somit keine unerwünschten Pflanzen von unter her in das Vegetationselement einwachsen können. Außerdem wirkt die Folie auch als mechanische Barriere, denn sie verhindert, dass eventuell nach oben wachsenden unerwünschte Pflanzen durch die Folie hindurch wachsen können. Da die Folie durchwurzelbar ausgebildet ist, können sich die Wurzeln der gewünschten niederen und/oder höheren Pflanzen gleichwohl durch die Folie hindurch in den darunter befindlichen anstehenden Boden erstrecken.

Ein weiteres erfindungsgemäßes Verfahren gemäß Anspruch 12 zur Herstellung eines Vegetationselements nach Anspruch 1 sieht vor, dass auf die Schicht aus verdichtetem Boden eine Einheit gelegt wird, die aus einer durchwurzelbaren Folie und einem durchwurzelbaren Träger besteht. Die anderen Verfahrensschritte gemäß Patentanspruch 11 bleiben unverändert. Durch die Verwendung der Einheit wird die Installation auf dem Feld bzw. auf dem anstehenden Boden vereinfacht.

Schließlich ist bei einem weiteren erfindungsgemäßen Verfahren gemäß Anspruch 13 zur Herstellung eines Vegetationselements nach Anspruch 1 vorgesehen, dass auf die Schicht aus verdichtetem Boden ein Verbund gelegt wird, der aus einer durchwurzelbaren Folie, einem durchwurzelbaren Träger und einer Krallschicht besteht. In die Krallschicht wird Substrat zur Bildung einer Substratschicht eingebracht, welche als Saatbeet für die niederen und/oder höheren Pflanzen dient. Die anderen Verfahrensschritte gemäß Anspruch 11 werden beibehalten. Durch die Krallschicht ist die Substratschicht gegen Erosion gesichert. Außerdem wird durch den Verbund das Auflegen der drei Komponenten Folie, Träger und Krallschicht wesentlich vereinfacht, und das Aufbringen ist außerdem unabhängig davon, ob während des Aufbringens Windstille herrscht oder nicht.

Nachfolgend wird die Erfindung an Hand der in der Zeichnung dargestellten Ausführungsbeispiele näher erläutert. Es zeigen:
Fig. 1 eine schematische Querschnittsansicht einer ersten Ausführungsform eines erfindungsgemäßen Vegetationselements, und
Fig. 2 eine schematische Querschnittsansicht einer zweiten Ausführungsform eines erfindungsgemäßen Vegetationselements.

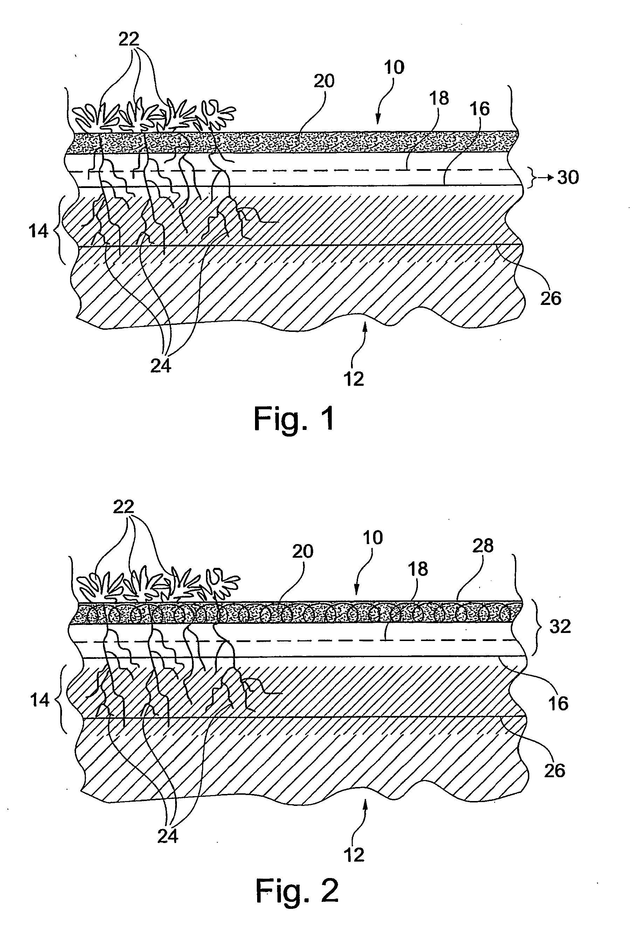

Das Vegetationselement 10 in Fig. 1 umfasst mehrere Schichten, die zur besseren Verdeutlichung im Abstand voneinander getrennt dargestellt sind. Zunächst wird ein anstehender Boden 12 verdichtet, so dass eine Schicht aus verdichtetem Boden 14 entsteht. Durch die Verdichtung des anstehenden Bodens 12 soll erreicht werden, dass der Boden bei der späteren Ernte mit einer entsprechenden Erntemaschine befahrbar ist.

Auf den verdichteten Boden 14 ist eine durchwurzelbare Folie 16 aufgelegt, und auf der Folie 16 wird ein Träger 18 angeordnet. Die Folie 16 ist gelocht und somit in gewissem Maße wasserdurchlässig und kann in üblicher Weise eine Folie mit organischen oder anorganischen Substanzen sein. Der Träger 18 wird beispielsweise durch ein PP-Netz gebildet. Schließlich wird auf den Träger 18 noch eine Substratschicht 20 aufgebracht, die als Saatbeet für die höheren und/oder niederen Pflanzen 22 dient. Die Dicke der Substratschicht liegt zwischen 0,5 cm und 5,0 cm.

Die Substratschicht 20 ist durch ein luftdurchlässiges Mineralgemisch gebildet, dem je nach Art der verwendeten Pflanzen organische Substanzen beigefügt sind. Auf die Substratschicht 20 wird ein keimfähiges Pflanzenmaterial der niederen und/oder höheren Pflanzen eingesät oder das keimfähige Pflanzenmaterial wird auf die Substratschicht 20 aufgestreut.

Danach wird das Vegetationselement 10 gärtnerisch gepflegt, bis sich die höheren und/oder niederen Pflanzen 22 gebildet haben. Die Wurzeln 24 der höheren und/oder niederen Pflanzen 22 erstrecken sich in der Substratschicht 20, durch den Träger 18 und durch die Folie 16 hindurch, und in dem verdichteten Boden 14. Wenn das Vegetationselement 10 nach der gärtnerischen Pflege fertig ist, wird es längs einer Trennlinie 26 in an sich bekannter Weise geerntet, indem das Vegetationselement 10 mit einem nicht dargestellten Schälmesser entlang der Trennlinie 26 vom Boden 12 entfernt wird und aufgerollt wird. Die so entstehenden Rollen werden dann zu einem gewünschten Bestimmungsort transportiert, um beispielsweise ein Dach mit dem Vegetationselement 10 zu begrünen.

In Fig. 1 sind die Folie 16 und der Träger 18 miteinander zu einer Einheit 30 verbunden, so dass die beiden Elemente Träger 18 und Folie 16 zusammen in einem Arbeitsgang auf den verdichteten Boden 14 aufgelegt werden können.

Das Vegetationselement 10 gemäß Fig. 2 entspricht im Wesentlichen dem Vegetationselement 10 in Fig. 1. Zusätzlich ist jedoch in Fig.2 auf dem Träger 18 eine Krallschicht 28 vorgesehen, in der sich die Substratschicht 20 befindet. Die Folie 16, der Träger 18 und die Krallschicht 28 sind miteinander verbunden, z.B. miteinander versteppt, und bilden einen Verbund 32, der in einem einzigen Arbeitsgang auf den verdichteten Boden 14 aufgelegt werden kann. Durch die Krallschicht 28 ist die darin befindliche Substratschicht 20 gegen Erosion geschützt.

Es ist zweckmäßig, wenn die Folie 16 den Träger 18 zumindest in Längsrichtung etwas überlappt. Damit wird erreicht, dass bei nebeneinander liegenden Bahnen des Vegetationselementes 10 stets eine geschlossene Schicht aus der Folie 16 gebildet wird, so dass keine unerwünschten Pflanzen oder Unkraut vom Boden 12 nach oben wachsen kann.

Sowohl in Fig. 1 als auch in Fig. 2 sind die durchwurzelbare Folie 16 und der durchwurzelbare Träger 18 biologisch abbaubar. Somit werden die Elemente Folie 16 und Träger 18 nach ihrer Verrottung dem natürlichen Kreislauf zugeführt, wenn sie die ihnen zugewiesene Funktion erfüllt haben.

### Bezugszeichenliste

### (ist Teil der Beschreibung)

- 10: Vegetationselement
- 12: anstehender Boden
- 14: verdichteter Boden
- 16: Folie
- 18: Träger
- 20: Substratschicht
- 22: Pflanzen
- 24: Wurzeln
- 26: Trennlinie
- 28: Krallschicht
- 30: Einheit
- 32: Verbund

## Patentansprüche

1. Vegetationselement (10) zur Begrünung von künstlichen Flächen, insbesondere Dächern, mit niederen und/oder höheren Pflanzen (22), mit einem durchwurzelbaren Träger (18) und mit einer unteren Schicht aus verdichtetem Boden (14) sowie mit Substrat als Nährboden für die Pflanzen, wobei das Vegetationselement (10) maschinell schälbar ist und aufrollbar ausgebildet ist, **dadurch gekennzeichnet, dass** auf der Schicht aus verdichtetem Boden (14) eine durchwurzelbare Folie (16) angeordnet ist, dass der Träger (18) auf die Folie (16) aufgelegt ist, dass auf dem Träger (18) eine Substratschicht (20) angeordnet ist, und dass in die Substratschicht (20) keimfähiges Pflanzenmaterial der höheren oder niederen Pflanzen (22) eingebracht ist, deren sich bildenden Wurzeln (24) sich in der Substratschicht (20), durch den Träger (18) und durch die Folie (16) hindurch und in der unteren Schicht aus verdichtetem Boden (14) erstrecken und verankern, dass die Folie (16) biologisch abbaubar ist, und dass der Verrottungszeitpunkt der Folie (16) so eingestellt ist, dass die Folie (16) zum Zeitpunkt der maschinellen Ernte zumindest größtenteils verrottet ist und dass der Verrottungszeitpunkt des Trägers (18) so eingestellt ist, dass der Träger (18) nach der Ernte und der Verarbeitung am neuen Bestimmungsort des Vegetationselements (10) verrottet.

2. Vegetationselement nach Anspruch 1 , **dadurch gekennzeichnet, dass** der Träger (18) ein Netz, ein Gittergewebe, eine Wirrlage oder ein Fasergemisch ist.

3. Vegetationselement nach Anspruch 1 oder 2 , **dadurch gekennzeichnet, dass** die Folie (16) gelocht ist.

4. Vegetationselement nach einem der Ansprüche 1 - 3, **dadurch gekennzeichnet, dass** die Folie (16) und der Träger (18) miteinander verbunden sind und eine Einheit (30) bilden.

5. Vegetationselement nach einem der Ansprüche 1 - 3, **dadurch gekennzeichnet, dass** auf dem Träger (18) eine Krallschicht (28) angeordnet ist, in der sich die Substratschicht (20) befindet.

6. Vegetationselement nach Anspruch 5, **dadurch gekennzeichnet, dass** die Folie (16), der Träger (18) und die Krallschicht (28) miteinander verbunden sind und einen Verbund (32) bilden.

7. Vegetationselement nach einem der Ansprüche 1 - 6, **dadurch gekennzeichnet, dass** die Substratschicht (20) 0,5 cm - 5 cm dick ist.

8. Vegetationselement nach einem der Ansprüche 1 - 7, **dadurch gekennzeichnet, dass** der Substratschicht (20) ein Trockenkleber beigemischt ist.

9. Vegetationselement nach einem der Ansprüche 1 - 8, **dadurch gekennzeichnet, dass** die Substratschicht (20) durch ein luftdurchlässiges Mineralgemisch gebildet ist,welches den Nährboden für die niederen und/oder höheren Pflanzen (22) bildet, und welches frei von Fremdsaatgut ist.

10. Vegetationselement nach Anspruch 9 , **dadurch gekennzeichnet, dass** das Mineralgemisch mit organischen Bestandteilen versehen ist.

11. Verfahren zur Herstellung eines Vegetationselements (10) nach Anspruch 1 , **gekennzeichnet durch** die folgenden Verfahrensschritte:
a) ein als Kulturgrundlage dienender anstehender Boden (12) wird verdichtet, so dass eine Schicht aus verdichtetem Boden (14) entsteht,
b) auf die Schicht aus verdichtetem Boden (14) wird eine durchwurzelbare Folie (16) gelegt,
c) auf die Folie (16) wird ein durchwurzelbarer Träger (18) gelegt,
d) auf den Träger (18) wird Substrat zur Bildung einer Substratschicht (20) aufgeschüttet, welche als Saatbeet für die niederen und/oder höheren Pflanzen (22) dient,
e) ein keimfähiges Pflanzenmaterial der niederen und/oder höheren Pflanzen (22) wird in die Substratschicht (20) eingesät oder aufgestreut,
f) das soweit hergestellte Vegetationselement wird gärtnerisch gepflegt, bis sich die niederen und/oder höheren Pflanzen (22) gebildet haben,
g) das Vegetationselement (10) wird maschinell geschält und geerntet.

12. Verfahren zur Herstellung eines Vegetationselements (10) nach Anspruch 1, **gekennzeichnet dadurch** durch die folgenden Verfahrensschritte:
a) ein als Kulturgrundlage dienender anstehender Boden (12) wird verdichtet, so dass eine Schicht aus verdichtetem Boden (14) entsteht,
b) auf die Schicht aus verdichtetem Boden (14) wird eine Einheit (30) gelegt, die aus einer durchwurzelbaren Folie (16) und einem durchwurzelbaren Träger (18) besteht.
c) auf den Träger (18) der Einheit (30) wird Substrat zur Bildung einer Substratschicht (20) aufgeschüttet, welche als Saatbeet für die niederen und/oder höheren Pflanzen (22) dient,
d) ein keimfähiges Pflanzenmaterial der niederen und/oder höheren Pflanzen (22) wird in die Substratschicht (20) eingesät oder aufgestreut,
e) das soweit hergestellte Vegetationselement wird gärtnerisch gepflegt, bis sich die niederen und/oder höheren Pflanzen (22) gebildet haben.
f) das Vegetationselement (10) wird maschinell geschält und geerntet.

13. Verfahren zur Herstellung eines Vegetationselements (10) nach Anspruch 1, **gekennzeichnet durch** die folgenden Verfahrensschritte:
a) ein als Kulturgrund läge dienender anstehender Boden (12) wird verdichtet, so dass eine Schicht aus verdichtetem Boden (14) entsteht,
b) auf die Schicht aus verdichtetem Boden (14) wird ein Verbund (32) gelegt, der aus einer durchwurzelbaren Folie (16), einem durchwurzelbaren Träger (18) und einer Krallschicht (28) besteht,
c) in die Krallschicht (28) wird Substrat zur Bildung einer Substratschicht (20) eingebracht, welche als Saatbeet für die niederen und/oder höheren Pflanzen (22) dient,
d) ein keimfähiges Pflanzenmaterial der niederen und/oder höheren Pflanzen (22) wird in die Substratschicht (20) eingesät oder aufgestreut,
e) das soweit hergestellte Vegetationselement wird gärtnerisch gepflegt, bis sich die niederen und/oder höheren Pflanzen (22) gebildet haben,
f) das Vegetationselement (10) wird maschinell geschält und geerntet.

## Claims

1. Vegetation element (10) for greening artificial surfaces, in particular roofs, having low and/or high plants (22), with a support (18) that can be penetrated by roots and with a lower layer of compressed soil (14) and with substrate as fertile ground for the plants, wherein the vegetation element (10) can be peeled by machine and can be rolled up, **characterised in that** a film (16) that can be penetrated by roots is arranged on the layer of compressed soil (14), that the support (18) is laid on the film (16), that a substrate layer (20) is arranged on the support (18), and that plant material of the high or low plants (22) capable of germination is introduced into the substrate layer (20), the forming roots (24) of which plants extend and are anchored in the substrate layer (20), through the support (18) and through the film (16) and in the lower layer composed of compressed soil (14), that the film (16) is biologically degradable, and that the rotting time of the film (16) is set such that the film (16) has at least rotted for the most part at the time of the mechanical harvesting and that the rotting time of the support (18) is set such that the support (18) rots after the harvest and processing at the new point of use of the vegetation element (10).

2. Vegetation element according to Claim 1, **characterised in that** the support (18) is a net, a woven screen, a random laid layer or a fibre blend.

3. Vegetation element according to Claims 1 or 2, **characterised in that** the film (16) is perforated.

4. Vegetation element according to one of Claims 1-3, **characterised in that** the film (16) and the support (18) are joined together to form a unit (30).

5. Vegetation element according to one of Claims 1-3, **characterised in that** a claw layer (28) in which the substrate layer (20) is located is arranged on the support (18).

6. Vegetation element according to Claim 5, **characterised in that** the film (16), the support (18) and the claw layer (28) are joined together to form a composite (32).

7. Vegetation element according to one of Claims 1-6, **characterised in that** the substrate layer (20) is 0.5 cm to 5 cm thick.

8. Vegetation element according to one of Claims 1-7, **characterised in that** a dry adhesive is admixed to the substrate layer (20).

9. Vegetation element according to one of Claims 1-8, **characterised in that** the substrate layer (20) is formed by an air-permeable mineral mixture which forms the fertile ground for the low and/or high plants (22) and which is free from foreign seed matter.

10. Vegetation element according to Claim 9, **characterised in that** organic constituents have been added to the mineral mixture.

11. Method for producing a vegetation element (10) according to Claim 1, **characterised by** the following process steps:
a) Native soil (12) serving as a culture base is compressed so that a layer of compressed soil (14) is created,
b) A film (16) that can be penetrated by roots is placed on the layer of compressed soil (14),
c) A support (18) that can be penetrated by roots is placed on the film (16),
d) Substrate is poured onto the support (18) to form a substrate layer (20) which serves as a seed bed for the low and/or high plants (22),
e) Plant material of the low and/or high plants (22) capable of germination is sown in or scattered on the substrate layer (20),
f) The vegetation element thus created is cared for horticulturally until the low and/or high plants (22) have formed,
g) The vegetation element (10) is peeled and harvested by machine.

12. Method for producing a vegetation element (10) according to Claim 1, **characterised by** the following process steps:
a) Native soil (12) serving as a culture base is compressed so that a layer of compressed soil (14) is created,
b) A unit (30), consisting of a film (16) that can be penetrated by roots and a support (18) that can be penetrated by roots, is placed on the layer of compressed soil (14),
c) Substrate is poured onto the support (18) of the unit (30) to form a substrate layer (20) which serves as a seed bed for the low and/or high plants (22),
d) Plant material of the low and/or high plants (22) capable of germination is sown in or scattered on the substrate layer (20),
e) The vegetation element thus created is cared for horticulturally until the low and/or high plants (22) have formed,
f) The vegetation element (10) is peeled and harvested by machine.

13. Method for producing a vegetation element (10) according to Claim 1, **characterised by** the following process steps:
a) Native soil (12) serving as a culture base is compressed so that a layer of compressed soil (14) is created,
b) A composite (32), consisting of a film (16) that can be penetrated by roots, a support (18) that can be penetrated by roots and a claw layer (28), is placed on the layer of compressed soil (14),
c) Substrate is introduced into the claw layer (28) to form a substrate layer (20) which serves as a seed bed for the low and/or high plants (22),
d) Plant material of the low and/or high plants (22) capable of germination is sown in or scattered on the substrate layer (20),
e) The vegetation element thus created is cared for horticulturally until the low and/or high plants (22) have formed,
f) The vegetation element (10) is peeled and harvested by machine.

## Revendications

1. Élément pour végétation (10) destiné à la végétalisation artificielle de surfaces, en particulier de toits, avec des plantes inférieures et/ou des plantes supérieures (22), comportant un support (18) pouvant être traversé par des racines et une couche inférieure de terrain compacté (14) ainsi qu'un substrat en tant que terrain nutritif pour les plantes, l'élément pour végétation (10) étant conçu pour pouvoir être prélevé et enroulé mécaniquement, **caractérisé en ce que** sur la couche de terrain compacté (14) est disposé un film (16) pouvant être traversé par des racines, **en ce que** le support (18) est appliqué sur le film (16), **en ce que** sur le support (18) est disposée une couche de substrat (20), et **en ce que** dans la couche de substrat (20) est introduit du matériel végétal apte à la germination des plantes supérieures ou inférieures (22), dont les racines (24) qui se forment s'étendent et s'accrochent dans la couche de substrat (20), à travers le support (18) et à travers le film (16) et dans la couche inférieure de terrain compacté (14), **en ce que** le film (16) est biologiquement dégradable, et **en ce que** le moment de décomposition du film (16) est ajusté de manière que le film (16) soit au moins dans une large mesure décomposé au moment de la récolte mécanique et **en ce que** le moment de décomposition du support (18) est ajusté de manière que le support (18) soit décomposé après la récolte et la mise en oeuvre au nouveau lieu de destination de l'élément pour végétation (10).

2. Élément pour végétation selon la revendication 1, **caractérisé en ce que** le support (18) est un filet, un tissu à mailles, un voile de fibres disposées au hasard ou un mélange de fibres.

3. Élément pour végétation selon la revendication 1 ou 2, **caractérisé en ce que** le film est percé de trous.

4. Élément pour végétation selon l'une quelconque des revendications 1 à 3, **caractérisé en ce que** le film (16) et le support (18) sont liés ensemble et forment une unité (30).

5. Élément pour végétation selon l'une quelconque des revendications 1 à 3, **caractérisé en ce que** sur le support (18) est disposée une couche d'accrochage (28), dans laquelle se trouve la couche de substrat (20).

6. Élément pour végétation selon la revendication 5, **caractérisé en ce que** le film (16), le support (18) et la couche d'accrochage (28) sont liés entre eux et constituent un composite (32).

7. Élément pour végétation selon l'une quelconque des revendications 1 à 6, **caractérisé en ce que** la couche de substrat (20) a une épaisseur de 0,5 cm à 5 cm.

8. Élément pour végétation selon l'une quelconque des revendications 1 à 7, **caractérisé en ce qu'**une colle à sec est incorporée à la couche de substrat (20).

9. Élément pour végétation selon l'une quelconque des revendications 1 à 8, **caractérisé en ce que** la couche de substrat (20) est formée par un mélange minéral perméable à l'air, qui constitue le milieu nutritif pour les plantes inférieures et/ou les plantes supérieures (22), et qui est exempt de semences étrangères.

10. Élément pour végétation selon la revendication 9, **caractérisé en ce que** le mélange minéral est doté de composants organiques.

11. Procédé pour la fabrication d'un élément pour végétation (10) selon la revendication 1, **caractérisé par** les étapes de processus suivantes :
a) on compacte un terrain (12) existant, servant de base de culture, de sorte qu'il en résulte une couche de terrain compacté (14),
b) on place sur la couche de terrain compacté (14) un film (16) pouvant être traversé par des racines,
c) on place sur le film (16) un support (18) pouvant être traversé par des racines,
d) on déverse sur le support (18) un substrat pour la formation d'une couche de substrat (20) qui sert de lit de semences pour les plantes inférieures et/ou les plantes supérieures (22),
e) on sème ou répand dans la couche de substrat (20) un matériel végétal apte la germination des plantes inférieures et/ou des plantes supérieures,
f) on entretient par des soins de jardinage l'élément pour végétation produit, jusqu'à ce que se soient formées les plantes inférieures et/ou les plantes supérieures (22),
g) on prélève et récolte mécaniquement l'élément pour végétation (10).

12. Procédé pour la fabrication d'un élément pour végétation (10) selon la revendication 1, **caractérisé par** les étapes de processus suivantes :
a) on compacte un terrain (12) existant, servant de base de culture, de sorte qu'il en résulte une couche de terrain compacté (14),
b) on place sur la couche de terrain compacté (14) une unité (30) qui consiste en un film (16) pouvant être traversé par des racines et en un support (18) pouvant être traversé par des racines,
c) on déverse sur le support (18) de l'unité (30) du substrat pour la formation d'une couche de substrat (20) qui sert de lit de semences pour les plantes inférieures et/ou les plantes supérieures (22),
d) on sème ou répand dans la couche de substrat (20) un matériel végétal apte à la germination des plantes inférieures et/ou des plantes supérieures,
e) on entretient par des soins de jardinage l'élément pour végétation produit, jusqu'à ce que se soient formées les plantes inférieures et/ou les plantes supérieures (22),
f) on prélève et récolte mécaniquement l'élément pour végétation (10).

13. Procédé pour la fabrication d'un élément pour végétation (10) selon la revendication 1, **caractérisé par** les étapes de processus suivantes :
a) on compacte un terrain (12) existant, servant de base de culture, de sorte qu'il en résulte une couche de terrain compacté (14),
b) on place sur la couche de terrain compacté (14) un composite (32) qui consiste en un film (16) pouvant être traversé par des racines, en un support (18) pouvant être traversé par des racines et en une couche d'accrochage (28),
c) on introduit dans la couche d'accrochage (28) un substrat pour la formation d'une couche de substrat (20) qui sert de lit de semences pour les plantes inférieures et/ou les plantes supérieures (22),
d) on sème ou répand dans la couche de substrat (20) un matériel végétal apte la germination des plantes inférieures et/ou des plantes supérieures (22),
e) on entretient par des soins de jardinage l'élément pour végétation produit, jusqu'à ce que se soient formées les plantes inférieures et/ou les plantes supérieures (22),
f) on prélève et récolte mécaniquement l'élément pour végétation (10).
